# EUROPÄISCHE PATENTSCHRIFT

(11) **EP 2 828 309 B1**
(45) Veröffentlichungstag und Bekanntmachung des Hinweises auf die Patenterteilung: **10.10.2018**
(21) Anmeldenummer: 13710414.7
(22) Anmeldetag: 19.03.2013
(51) Int. Cl.: B32B 27/40, C08J 9/00, C08J 9/02, C08G 18/40, C08G 18/42, C08G 18/48, C08G 18/76, C08G 101/00, C08K 5/00, C08J 9/14

(54) **VERFAHREN ZUR HERSTELLUNG VON POLYURETHAN-HARTSCHÄUMEN UND POLYISOCYANURAT-HARTSCHÄUMEN**
VERFAHREN ZUR HERSTELLUNG VON POLYURETHAN-HARTSCHÄUMEN UND POLYISOCYANURAT-HARTSCHÄUMEN
PROCÉDÉ DE PRODUCTION DE MOUSSES DURES DE POLYURÉTHANE ET MOUSSES DURES DE POLYURÉTHANE

(30) Priorität: 23.03.2012 EP 12160963
(43) Veröffentlichungstag der Anmeldung: 28.01.2015
(73) Patentinhaber: BASF SE, 67056 Ludwigshafen am Rhein (DE)
(72) Erfinder: KAMPF, Gunnar, 32369 Rahden (DE)
(74) Vertreter: BASF IP Association
(86) Internationale Anmeldenummer: PCT/EP2013/055675
(87) Internationale Veröffentlichungsnummer: WO 2013/139781

(56) Entgegenhaltungen:
- EP-A2- 2 177 555
- WO-A2-2010/043624

## Beschreibung

Die vorliegende Erfindung betrifft ein Verfahren zur Herstellung von Polyurethan-Hartschaumstoffen oder Polyisocyanurat-Hartschaumstoffen unter Verwendung von bestimmten Polyetheresterpolyolen auf Basis aromatischer Dicarbonsäuren. Die vorliegende Erfindung betrifft außerdem die so erhältlichen Hartschaumstoffe sowie deren Verwendung zur Herstellung von Sandwichelementen mit starren oder flexiblen Deckschichten. Darüber hinaus richtet sich die vorliegende Erfindung auf die zugrundeliegenden Polyolkomponenten.

Die Herstellung von Polyurethan-Hartschaumstoffen durch Umsetzung von organischen oder modifizierten organischen Di- oder Polyisocyanaten mit höhermolekularen Verbindung mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist bekannt und wird in zahlreichen Patent- und Literaturveröffentlichungen beschrieben.

Im Rahmen der vorliegenden Offenbarung werden die Begriffe "Polyesterpolyol", "Polyesterol", "Polyesteralkohol" und die Abkürzung "PESOL" gleichbedeutend verwendet.

Bei Einsatz von Polyesterpolyolen ist es üblich, Polykondensate aus aromatischen und/oder aliphatischen Dicarbonsäuren und Alkandiolen und/oder -triolen bzw. Etherdiolen einzusetzen. Es ist aber auch möglich, Polyesterabfälle und hier insbesondere Polyethylenterephthalat (PET)- bzw. Polybutylenterephthalat (PBT)-Abfälle zu verarbeiten. Hierfür sind eine ganze Reihe von Verfahren bekannt und beschrieben. Grundlage einiger Verfahren ist die Umwandlung des Polyesters in einen Diester der Terephthalsäure, z.B. in Dimethylterephthalat. In DE-A 100 37 14 und US-A 5,051,528 werden derartige Umesterungen unter Einsatz von Methanol und Umesterungskatalysatoren beschrieben.

Ferner ist bekannt, dass Terephthalsäure-basierte Ester bezüglich des Brandverhaltens Phthalsäure-basierten Estern überlegen sind, wie zum Beispiel in WO 2010/043624 beschrieben.

Beim Einsatz der Polyesterpolyole, die auf aromatischen Carbonsäuren oder deren Derivaten basieren (wie Terephthalsäure oder Phthalsäureanhydrid), zur Herstellung von Polyurethan (PU)-Hartschaumstoffen macht sich oft die hohe Viskosität der Polyesterpolyole negativ bemerkbar, da somit die Viskosität der Abmischungen mit den Polyestern ansteigt und dadurch die Vermischung mit dem Isocyanat deutlich erschwert wird.

Aus der EP-A 1 058 701 sind aromatische Polyesterpolyole mit niedriger Viskosität bekannt, die durch Umesterung eines Gemisches aus Phtalsäurederivaten, Diolen, Polyolen und hydrophoben fettbasierten Materialien erhalten werden.

Zudem kann es in bestimmten Systemen zur Herstellung von PU-Hartschaumstoffen, zum Beispiel unter Verwendung von Glycerin als höherfunktionelle alkoholische Polyester-Komponente, zu Problemen mit einer unzureichenden Maßhaltigkeit kommen, d.h. das Schaumstoff-Produkt verformt sich nach der Entformung oder nach der Druckstrecke bei Verarbeitung nach dem Doppelbandverfahren deutlich.

Auch ist das Problem des Verhaltens von PU-Hartschaumstoffen im Brandfall bisher nicht für alle Systeme befriedigend gelöst. Beispielsweise kann sich beim Einsatz von Trimethylolpropan (TMP) als höherfunktionelle alkoholische Polyester-Komponente im Brandfall eine toxische Verbindung bilden.

Ein generelles Problem bei der Herstellung von Hartschaumstoffen ist die Ausbildung von Oberflächendefekten, vorzugsweise an der Grenzfläche zu metallischen Deckschichten. Diese Schaumoberflächendefekte bedingen die Ausbildung einer unebenen Metalloberfläche bei Sandwichelementen und führen somit oft zu einer optischen Beanstandung des Produkts. Eine Verbesserung der Schaumoberfläche vermindert die Häufigkeit des Auftretens solche Oberflächendefekte und führt somit zu einer optischen Verbesserung der Oberfläche von Sandwichelementen.

Polyurethan-Hartschaumstoffe zeigen häufig eine hohe Sprödigkeit, was sich beim Zuschnitt der Schäume entweder durch eine starke Staubentwicklung und hohe Empfindlichkeit des Schaums zeigt, oder im Falle des Sägens des Schaumstoffs, vor allem beim Sägen von Verbundelementen mit metallischen Deckschichten und einem Kern aus einem Polyisocyanuratschaum zur Rissbildung im Schaum führen kann.

Ferner ist es allgemein wünschenswert, Systeme mit einer möglichst hohen Eigenreaktivität bereitzustellen, um den Einsatz von Katalysatoren zu minimieren.

All diese Probleme können umgangen werden, in dem spezielle Polyetherole als höherfunktionelle alkoholische Polyester-Komponente zur Herstellung des Polyesterpolyols eingesetzt werden.

Im Regelfall werden diese Polyetherole durch katalysierte Alkoxylierung eines OH-funktionellen Starters hergestellt.

Als Alkoxylierungs-Katalysatoren werden standardmäßig basische Verbindungen, insbesondere KOH, eingesetzt. Auch Dimetallcyanid (DMC)-Katalysatoren oder Carbene werden in manchen Fällen verwendet.

Bei den oft verwendeten KOH-Katalysatoren für die Alkoxylierung von OH-funktionellen Verbindungen muss jedoch nach der Umsetzung noch ein Aufarbeitungsschritt erfolgen, um den Katalysator vom Produkt abzutrennen. Diese Aufarbeitung erfolgt normalerweise durch Neutralisation und anschließende Filtration. Dabei bleiben allerdings meist gewisse Mengen des Produkts im abzutrennenden Katalysator, wodurch die Produktausbeute sinkt.

Wünschenswert wäre es, wenn auf die Aufarbeitung der Polyetherole verzichtet werden könnte (u.a. aufgrund von Polyolverlusten und der notwendigen Investition in diesen Anlagenteil). Bei der routinemäßig angewandten KOH-Katalyse würde jedoch der basische Katalysator im Polyetherol verbleiben und blockiert die nachfolgende säurekatalysierte Veresterung zur Herstellung von Polyesterolen.

Aufgabe der Erfindung war es somit, PU-Hartschaumstoffe mit den oben beschriebenen technischen Vorteilen bereitzustellen, wobei die dazu verwendeten Einsatzstoffe, vor allem die dazu verwendeten Polyester auf Basis der speziellen Polyetherole, mit möglichst geringem Aufwand (also u.a. mit möglichst wenig Aufarbeitungs- und Reinigungsschritten) hergestellt werden sollten.

Gelöst wird die Aufgabe durch ein Verfahren zur Herstellung von Polyurethan-Hartschaumstoffen oder Polyisocyanurat-Hartschaumstoffen umfassend die Umsetzung von
A) mindestens einem Polyisocyanat,
B) mindestens einem Polyetheresterpolyol, erhältlich durch Veresterung von
   b1) 10 bis 70 Mol-% einer Dicarbonsäurezusammensetzung, enthaltend
      b11) 50 bis 100 Mol-%, bezogen auf die Dicarbonsäurezusammensetzung, einer oder mehrerer aromatischer Dicarbonsäuren oder Derivate derselben,
      b12) 0 bis 50 Mol-%, bezogen auf die Dicarbonsäurezusammensetzung b1), einer oder mehrerer aliphatischer Dicarbonsäuren oder Derivate derselben,
   b2) 2 bis 30 Mol-% einer oder mehrerer Fettsäuren und/oder Fettsäurederivate,
   b3) 10 bis 70 Mol-% eines oder mehrerer aliphatischer oder cycloaliphatischer Diole mit 2 bis 18 C-Atomen oder Alkoxylate derselben,
   b4) 2 bis 50 Mol-% eines Polyetherpolyols mit einer Funktionalität größer oder gleich 2, hergestellt durch Alkoxylierung eines Polyols mit einer Funktionalität größer oder gleich 2 in Gegenwart eines Amins als Katalysator,
   jeweils bezogen auf die Gesamtmenge der Komponenten b1) bis b4), wobei sich die Komponenten b1) bis b4) zu 100 Mol-% addieren,
C) gegebenenfalls weiteren Polyesterpolyolen, die sich von denen der Komponente B) unterscheiden,
D) mindestens ein Polyetherpolyol, und
E) gegebenenfalls Flammschutzmitteln,
F) einem oder mehreren Treibmitteln,
G) Katalysatoren, und
H) gegebenenfalls weiteren Hilfsmitteln oder Zusatzstoffen,
wobei das Massenverhältnis der Summe der Komponenten B) und gegebenenfalls C) zu Komponente D) mindestens 7 beträgt.

Überraschenderweise können die in Gegenwart eines Amins als Katalysator hergestellten Polyetherpolyole b4) ohne Aufarbeitungsschritt und ohne andere Nachteile in der nachfolgenden sauerkatalysierten Veresterung eingesetzt werden, obwohl der basische, aminische Alkoxylierungskatalysator im Polyetherpolyol b4) verbleibt.

Gegenstand der vorliegenden Erfindung ist außerdem eine Polyolkomponente enthaltend die vorgenannten Komponenten B) bis H), wobei das Massenverhältnis der Summe der Komponenten B) und gegebenenfalls C) zu Komponente D) mindestens 7 beträgt.

Weitere Gegenstände der vorliegenden Erfindung sind Polyurethan-Hartschaumstoffe und Polyisocyanurat-Hartschaumstoffe, erhältlich nach dem erfindungsgemäßen Verfahren sowie deren Verwendung zur Herstellung von Sandwich-Elementen mit starren oder flexiblen Deckschichten.

Die Erfindung wird nachfolgend näher erläutert. Kombinationen von bevorzugten Ausführungsformen verlassen den Rahmen der vorliegenden Erfindung nicht. Dies gilt insbesondere in Bezug auf die als bevorzugt gekennzeichneten Ausführungsformen der einzelnen Komponenten A) bis H) der vorliegenden Erfindung. Die nachfolgend im Rahmen von Komponente B) bis H) aufgeführten Ausführungsformen beziehen sich sowohl auf das erfindungsgemäße Verfahren und die so erhältlichen Hartschaumstoffe als auch auf die erfindungsgemäßen Polyolkomponenten.

### Komponente B

Im Rahmen der vorliegenden Offenbarung sind die Begriffe "Polyesterpolyol" und "Polyesterol" gleichbedeutend, ebenso die Begriffe "Polyetherpolyol" und "Polyetherol".

Vorzugsweise enthält die Komponente b11) mindestens eine Verbindung, die aus der Gruppe bestehend aus Terephthalsäure, Dimethylterephthalat (DMT), Polyethylenterephthalat (PET), Phthalsäure, Phthalsäureanhydrid (PSA) und Isophthalsäure ausgewählt wird. Besonders bevorzugt enthält die Komponente b11) mindestens eine Verbindung aus der Gruppe bestehend aus Terephthalsäure, Dimethylterephthalat (DMT), Polyethylenterephthalat (PET) und Phthalsäureanhydrid (PSA). Ganz besonders bevorzugt enthält die Komponente b11) Phthalsäureanhydrid, Dimethylterephthalat (DMT), Terephthalsäure oder Gemische daraus. Die aromatischen Dicarbonsäuren oder deren Derivate der Komponente b11) werden besonders bevorzugt aus den vorgenannten aromatischen Dicarbonsäuren bzw. Dicarbonsäurederivaten und im speziellen aus Terephthalsäure und/oder Dimethylterephthalat (DMT) ausgewählt. Terephthalsäure und/oder DMT in Komponente b11) führt zu Polyetherestern B) mit besonders guten Brandschutzeigenschaften. Terephthalsäure ist dabei ganz besonders bevorzugt, da im Gegensatz zu DMT die Entstehung von störenden Abspaltungsprodukten vermieden werden kann.

Im Allgemeinen sind aliphatische Dicarbonsäuren oder-derivate (Komponente b12) zu 0 bis 30 Mol-%, bevorzugt 0 bis 10 Mol-% in der Dicarbonsäurezusammensetzung b1) enthalten. Besonders bevorzugt enthält die Dicarbonsäurezusammensetzung b1) keine aliphatischen Dicarbonsäuren oder Derivate derselben und besteht somit zu 100 Mol-% aus einer oder mehreren aromatischen Dicarbonsäuren oder deren Derivate, wobei die vorgenannten bevorzugt sind.

Vorzugsweise wird die Komponente b2) in Mengen von 3 bis 20 Mol-%, besonders bevorzugt 5 bis 18 Mol-% eingesetzt.

Vorzugsweise wird die Komponente b3) in Mengen von 20 bis 60 Mol-%, bevorzugt von 25 bis 55 Mol-%, besonders bevorzugt von 30 bis 45 Mol-% eingesetzt.

Vozugsweise wird die Komponente b4) in Mengen von 2 bis 40 Mol-%, bevorzugt 8 bis 35 Mol-%, besonders bevorzugt 15 bis 25 Mol-% eingesetzt.

In einer Ausführungsform der Erfindung besteht die Fettsäure oder das Fettsäurederivat b2) aus einer Fettsäure bzw. Fettsäuremischung, einem oder mehreren Glycerin-Estern von Fettsäuren, bzw. von Fettsäuremischungen und/oder einem oder mehreren Fettsäuremonoestern, wie beispielsweise Biodiesel oder Methylestern von Fettsäuren, besonders bevorzugt besteht die Komponente b2) aus einer Fettsäure bzw. Fettsäuremischung und/oder einem oder mehreren Fettsäuremonoestern, spezifischer besteht die Komponente b2) aus einer Fettsäure bzw. Fettsäuremischung und/oder Biodiesel und im speziellen besteht die Komponente b2) aus einer Fettsäure bzw. Fettsäuremischung.

In einer bevorzugten Ausführungsform der Erfindung ist die Fettsäure oder das Fettsäurederivat b2) ausgewählt aus der Gruppe bestehend aus Rizinusöl, Polyhydroxyfettsäuren, Ricinolsäure, Stearinsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, tierischem Talg, wie beispielsweise Rindertalg, Fettsäuren, Hydroxyl-modifizierten Fettsäuren, Biodiesel, Methylestern von Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure sowie Mischfettsäuren.

In einer besonders bevorzugten Ausführungsform der vorliegenden Erfindung ist die Fettsäure oder das Fettsäurederivat b2) Ölsäure, Biodiesel, Sojaöl, Rapsöl oder Talg, besonders bevorzugt Ölsäure, Biodiesel, Sojaöl, Rapsöl oder Rindertalg, spezifischer Ölsäure oder Biodiesel und im speziellen Ölsäure. Die Fettsäure oder das Fettsäurederivat verbessert unter anderem die Treibmittellöslichkeit bei der Herstellung von Polyurethanhartschaumstoffen.

Ganz besonders bevorzugt umfasst Komponente b2) kein Triglycerid, insbesondere kein Öl oder Fett. Das durch die Veresterung bzw. Umesterung freiwerdende Glycerin aus dem Triglycerid verschlechtert wie oben ausgeführt die Maßhaltigkeit des Hartschaums. Bevorzugte Fettsäuren und Fettsäurederivate sind im Rahmen von Komponente b2) insofern die Fettsäuren selbst sowie Alkylmonoester von Fettsäuren oder Alkylmonoester von Fettsäuregemischen, insbesondere die Fettsäuren selbst und/oder Biodiesel.

Vorzugsweise ist das aliphatische oder cycloaliphatische Diol b3) ausgewählt aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-pentandiol und Alkoxylaten derselben. Besonders bevorzugt ist das aliphatische Diol b3) Monoethylenglykol oder Diethylenglykol, insbesondere Diethylenglykol.

In einer bevorzugten Ausführungsform der vorliegenden Erfindung ist der Aminkatalysator zur Herstellung der Komponente b4) ausgewählt aus der Gruppe enthaltend Dimethylethanolamin (DMEOA), Imidazol und Imidazolderivate sowie Mischungen daraus, besonders bevorzugt Imidazol.

Vorzugsweise wird ein solches Polyetherpolyol b4) mit einer Funktionalität größer 2 eingesetzt, das durch Alkoxylierung eines Polyols mit einer Funktionalität größer oder gleich 3 hergestellt wurde.

Vorzugsweise weist das Polyetherpolyol b4) eine Funktionalität von größer als 2 auf. Vorzugsweise weist es eine Funktionalität größer oder gleich 2,7, insbesondere größer oder gleich 2,9 auf. Im Allgemeinen weist es eine Funktionalität von kleiner oder gleich 6, bevorzugt kleiner oder gleich 5, besonders bevorzugt kleiner oder gleich 4 auf.

In einer Ausführungsform der vorliegenden Erfindung ist das Polyetherpolyol b4) erhältlich durch Umsetzung eines Polyols mit einer Funktionalität von größer als 2 mit Ethylenoxid und/ oder Propylenoxid, bevorzugt mit Ethylenoxid. Besonders bevorzugt ist das Polyetherpolyol b4) erhältlich durch Alkoxylierung mit Ethylenoxid, was zu Polyurethan-Hartschaumstoffen mit verbesserten Brandschutzeigenschaften führt.

Vorzugsweise ist das Polyetherpolyol b4) erhältlich durch Alkoxylierung, vorzugsweise Ethoxylierung, eines Polyols, ausgewählt aus der Gruppe bestehend aus Sorbit, Pentaerythrit, Trimethylolpropan, Glycerin, Polyglycerin und deren Gemischen, besonders bevorzugt eines Polyols, ausgewählt aus der Gruppe bestehend aus Trimethylolpropan und Glycerin.

In einer speziellen Ausführungsform der Erfindung besteht das Polyetherpolyol b4) aus dem Umsetzungsprodukt von Glycerin mit Ethylenoxid und/ oder Propylenoxid, bevorzugt mit Ethylenoxid. Hierdurch ergibt sich eine besonders hohe Lagerstabilität der Komponente B.

In einer weiteren speziellen Ausführungsform der Erfindung besteht das Polyetherpolyol b4) aus dem Umsetzungsprodukt von Trimethylolpropan mit Ethylenoxid und/oder Propylenoxid, bevorzugt mit Ethylenoxid. Hierdurch ergibt sich ebenfalls eine besonders hohe verbesserte Lagerstabilität der Komponente B).

Vorzugsweise weist das Polyetherpolyol b4) eine OH-Zahl im Bereich von 150 bis 1250 mg KOH/g, bevorzugt 300 bis 950 mg KOH/g, besonders bevorzugt 500 bis 800 mg KOH/g auf. In diesem Bereich lassen sich besonders günstige mechanische Eigenschaften sowie Brandschutzeigenschaften erzielen.

In einer besonders bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpolyols b4) im Bereich von 500 bis 800 mg KOH/g, bevorzugt 500 bis 650 mg KOH/g, liegt und Imidazol als Alkoxylierungskatalysator Verwendung findet.

In einer insbesondere bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpolyols b4) im Bereich von 500 bis 800 mg KOH/g, bevorzugt 500 bis 650 mg KOH/g, liegt, Imidazol als Alkoxylierungskatalysator Verwendung findet, und das aliphatische oder cycloaliphatische Diol b3) ist Diethylenglykol, und die Fettsäure oder das Fettsäurederivat b2) ist Ölsäure.

Vorzugsweise werden pro kg Polyetheresterpolyol B) mindestens 200 mmol, besonders bevorzugt mindestens 400 mmol, insbesondere bevorzugt mindestens 600 mmol, speziell bevorzugt mindestens 800 mmol, im speziellen mindestens 1000 mmol der Komponente b4) verwendet.

Vorzugsweise weist das Polyetheresterpolyol B) eine zahlengewichtete mittlere Funktionalität von größer oder gleich 2, bevorzugt von größer als 2, besonders bevorzugt von größer als 2,2 und insbesondere von größer als 2,3 auf, was zu einer höheren Vernetzungsdichte des damit hergestellten Polyurethans und damit zu besseren mechanischen Eigenschaften des Polyurethanschaums führt.

Zur Herstellung der Polyetheresterpolyole können die aliphatischen und aromatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280°C, vorzugsweise 180 bis 260°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyetheresterpolyole werden die organischen Polycarbonsäuren und/oder -derivate und mehrwertigen Alkohole vorteilhafterweise im Molverhältnis von 1 : 1 bis 2,2, vorzugsweise 1 : 1,05 bis 2,1 und besonders bevorzugt 1 : 1,1 bis 2,0 polykondensiert.

Die erhaltenen Polyetheresterpolyole weisen im Allgemeinen ein zahlenmittleres Molekulargewicht von 300 bis 3000, vorzugsweise 400 bis 1000 und insbesondere 450 bis 800 auf.

Im Allgemeinen ist der Anteil der erfindungsgemäßen Polyetheresterpolyole B) mindestens 10 Gew.-%, bevorzugt mindestens 20 Gew.-%, besonders bevorzugt mindestens 40 Gew.-% und im Speziellen mindestens 50 Gew.-% bezogen auf die Summe der Komponenten B) bis H).

Zur Herstellung der Polyurethan-Hartschaumstoffe nach dem erfindungsgemäßen Verfahren finden, neben den oben beschriebenen speziellen Polyesterpolyolen (Polyetheresterpolyole B), die an sich bekannten Aufbaukomponenten Verwendung, zu denen im Einzelnen folgendes auszuführen ist.

### Komponente A

Unter Polyisocyanat wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, so beträgt der zahlengewichtete Mittelwert der Funktionalität der eingesetzten Komponente A) mindestens 2.

Als Polyisocyanate A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente A) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder-2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate der Komponente A) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDI-basierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente A) mindestens zwei, insbesondere mindestens 2,2 und besonders bevorzugt mindestens 2,4. Die Funktionalität der Komponente A) beträgt bevorzugt von 2,2 bis 4 und besonders bevorzugt von 2,4 bis 3.

Vorzugsweise beträgt der Gehalt an Isocyanatgruppen der Komponente A) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente A) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,4 auf.

Die Viskosität der eingesetzten Komponente A) kann in einem weiten Bereich variieren. Vorzugsweise weist die Komponente A) eine Viskosität von 100 bis 3000 mPa*s, besonders bevorzugt von 200 bis 2500 mPa*s, auf.

### Komponente C

Geeignete Polyesterpolyole C), die sich von den Polyetheresterpolyolen B) unterscheiden, können beispielsweise aus organischen Dicarbonsäuren mit 2 bis 12 Kohlenstoffatomen, vorzugsweise aromatischen, oder Gemischen aus aromatischen und aliphatischen Dicarbonsäuren und mehrwertigen Alkoholen, vorzugsweise Diolen, mit 2 bis 12 Kohlenstoffatomen, vorzugsweise 2 bis 6 Kohlenstoffatomen hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Verwendet werden können ebenso Derivate dieser Dicarbonsäuren, wie beispielsweise Dimethylterephthalat. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der weiteren Polyesterpolyole C) kommen auch biobasierte Ausgangsstoffe und/oder deren Derivate in Frage, wie z. B. Rizinusöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxyl-modifizierten Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Im Allgemeinen beträgt das Massenverhältnis der Polyetheresterpolyole B) zu den Polyesterpolyolen C) mindestens 0,1, bevorzugt mindestens 0,25, besonders bevorzugt mindestens 0,5 und insbesondere mindestens 0,8. Bevorzugt beträgt der Anteil der Polyetheresterpolyole B) an der Gesamtmenge der Polyesterpolyole B) und C) mindestens 25 Gew.-%, bevorzugt mindestens 50 Gew.-%, besonders bevorzugt mindestens 75 Gew.-%, insbesondere 100 Gew.-%. Besonders bevorzugt werden keine weiteren Polyesterpolyole C) mit umgesetzt.

### Komponente D

Erfindungsgemäß wird als Komponente D) mindestens ein Polyetherpolyole D) verwendet. Die Polyetherole D) können die nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan. Besonders bevorzugt sind die genannten diprimären Amine, beispielsweise Ethylendiamin.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei oder mehrwertige Alkohole, wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose.

Die Polyetherpolyole D), vorzugsweise Polyoxypropylenpolyole und Polyoxyethylenpolyole, besonders bevorzugt Polyoxyethylenpolyole, besitzen eine Funktionalität von vorzugsweise 2 bis 6, besonders bevorzugt 2 bis 4, insbesondere 2 bis 3 und im Speziellen 2 und zahlenmittlere Molekulargewichte von 150 bis 3000 g/mol, vorzugsweise 200 bis 2000 g/mol und insbesondere 250 bis 1000 g/mol.

In einer bevorzugten Ausführungsform der Erfindung wird ein alkoxyliertes Diol, bevorzugt ein ethoxyliertes Diol, beispielsweise ethoxylierter Ethylenglykol, als Polyetherpolyol D) mitverwendet, vorzugsweise handelt es sich dabei um Polyethylenglykol.

In einer speziellen Ausführungsform der Erfindung besteht die Polyetherol-Komponente D) ausschließlich aus Polyethylenglykol, vorzugsweise mit einem zahlenmittleren Molekulargewicht von 250 bis 1000 g/mol.

Im Allgemeinen beträgt der Anteil der Polyetherpolyole D) 0 bis 11 Gew.-%, bevorzugt 2 bis 9 Gew.-%, besonders bevorzugt 4 bis 8 Gew.-%, bezogen auf die Summe der Komponenten B) bis H).

Erfindungsgemäß ist das Massenverhältnis der Summe der Komponenten B) und C) zu der Komponente D) größer als 7, bevorzugt größer als 7,5, besonders bevorzugt größer als 8, insbesondere bevorzugt größer als 10 und speziell bevorzugt größer als 12.

Weiterhin ist das erfindungsgemäße Massenverhältnis der Summe der Komponenten B) und C) zu der Komponente D) kleiner als 80, bevorzugt kleiner als 40, besonders bevorzugt kleiner als 30, insbesondere bevorzugt kleiner als 20, speziell bevorzugt kleiner als 16 und im speziellen kleiner als 13.

### Komponente E

Als Flammschutzmittel E) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und PHT-4-Diol, sowie chlorierte Phosphate wie Tris-(2-chlorethyl)phosphat, Tris-(2-chlorpropyl)phosphat (TCPP), Tris(1,3-dichlorpropyl)phosphat, Trikresylphosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP), Diphenylkresylphosphat (DPK) als flüssige Flammschutzmittel eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin, Blähgraphit und gegebenenfalls aromatische Polyester zum Flammfestmachen der Polyurethan-Hartschaumstoffe verwendet werden.

Bevorzugte Flammschutzmittel weisen keine mit Isocyanatgruppen reaktive Gruppen auf. Vorzugsweise sind die Flammschutzmittel bei Raumtemperatur flüssig. Besonders bevorzugt sind TCPP, DEEP, TEP, DMPP und DPK.

Im Allgemeinen beträgt der Anteil des Flammschutzmittels E), 2 bis 50 Gew.-%, bevorzugt 5 bis 30 Gew.-%, besonders bevorzugt 8 bis 25 Gew.-%, bezogen auf die Komponenten B) bis H).

### Komponente F

Zu Treibmitteln F), welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den Polyisocyanaten A) inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden keine halogenierten Kohlenwasserstoffe als Treibmittel verwendet. Vorzugsweise werden als chemische Treibmittel Wasser, Ameisensäure-Wasser-Mischungen oder Ameisensäure verwendet, besonders bevorzugte chemische Treibmittel sind Ameisensäure-Wasser-Mischungen oder Ameisensäure. Vorzugsweise werden als physikalische Treibmittel Pentanisomere, bzw. Mischungen von Pentanisomeren verwendet.

Die chemischen Treibmittel können dabei alleine, d.h. ohne Zusatz von physikalischen Treibmitteln, oder zusammen mit physikalischen Treibmitteln verwendet werden. Vorzugsweise werden die chemischen Treibmittel zusammen mit physikalischen Treibmitteln verwendet, wobei die Verwendung von Ameisensäure-Wasser-Mischungen oder reiner Ameisensäure zusammen mit Pentanisomeren oder Gemischen aus Pentanisomeren bevorzugt sind.

Die Treibmittel sind entweder ganz oder teilweise in der Polyolkomponente (d.h. B+C+D+E+F+G+H) gelöst oder werden direkt vor dem Verschäumen der Polyolkomponente über einen Statikmischer zudosiert. Für gewöhnlich liegen Wasser, Ameisensäure-Wasser-Mischungen oder Ameisensäure ganz oder teilweise in der Polyolkomponente gelöst vor und wird das physikalische Treibmittel (beispielsweise Pentan) und gegebenenfalls der Rest des chemischen Treibmittels "online" dosiert.

Zu der Polyolkomponente wird in situ Pentan, eventuell ein Teil des chemischen Treibmittels, sowie teilweise oder vollständig der Katalysator zugegeben. Die Hilfs- und Zusatzstoffe, wie auch die Flammschutzmittel sind bereits im Polyolblend enthalten.

Die eingesetzte Menge des Treibmittels bzw. der Treibmittelmischung liegt bei 1 bis 45 Gew.-%, vorzugsweise 1 bis 30 Gew.-%, besonders bevorzugt 1,5 bis 20 Gew.-%, jeweils bezogen auf die Summe der Komponenten B) bis H).

Dient Wasser, Ameisensäure oder eine Ameisensäure-Wasser-Mischung als Treibmittel, so wird es vorzugsweise der Polyolkomponente (B+C+D+E+F+G+H) in einer Menge von 0,2 bis 10 Gew.-%, bezogen auf die Komponente B), zugesetzt. Der Zusatz des Wassers, der Ameisensäure oder der Ameisensäure-Wasser-Mischung kann in Kombination mit dem Einsatz der anderen beschriebenen Treibmittel erfolgen. Bevorzugt wird Ameisensäure oder eine Ameisensäure-Wasser-Mischung in Kombination mit Pentan eingesetzt.

### Komponente G

Als Katalysatoren G) zur Herstellung der Polyurethan-Hartschaumstoffe werden insbesondere Verbindungen verwendet, die die Reaktion der reaktive Wasserstoffatome, insbesondere Hydroxylgruppen, enthaltenden Verbindungen der Komponenten B) bis H) mit den Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo.-(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)-ethanol, N,N',N"-Tris-(dialkylaminoalkyl)hexahydrotriazine, z.B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen. Vorzugsweise verwendet werden 0,001 bis 10 Gew.-teile Katalysator bzw. Katalysatorkombination, bezogen (d. h. gerechnet) auf 100 Gewichtsteile der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

### Komponente H

Der Reaktionsmischung zur Herstellung der Polyurethan-Hartschaumstoffe können gegebenenfalls noch weitere Hilfsmittel und/oder Zusatzstoffe H) zugesetzt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-teile, bezogen (d. h. gerechnet) auf 100 Gew.-teile der Komponente B), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A) bis H), zugegeben, wobei jedoch der Gehalt an Matten, Vliesen und Geweben aus natürlichen und synthetischen Fasern Werte bis 80 Gew.-%, bezogen auf das Gewicht der Komponenten A) bis H), erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Ein weiterer Gegenstand der vorliegenden Erfindung ist eine Polyolkomponente enthaltend:
10 bis 90 Gew.-% der Polyetheresterpolyole B),
0 bis 60 Gew.-% der weiteren Polyesterpoylole C),
0,1 bis 11 Gew.-% der Polyetherpolyole D),
2 bis 50 Gew.-% Flammschutzmittel E),
1 bis 45 Gew.-% Treibmittel F),
0,5 bis 10 Gew.-% Katalysatoren G), und
0,5 bis 20 Gew.-% weitere Hilfs- und Zusatzstoffe H),
jeweils wie vorstehend definiert und jeweils bezogen auf das Gesamtgewicht der Komponenten B) bis H), wobei sich die Gew.-% zu 100 Gew.-% ergänzen, und wobei das Massenverhältnis der Summe der Komponenten B) und C) zu Komponente D) mindestens 7 beträgt.

Besonders bevorzugt umfasst die Polyolkomponente
50 bis 90 Gew.-% der Polyetheresterpolyole B),
0 bis 20 Gew.-% der weiteren Polyesterpoylole C),
2 bis 9 Gew.-% der Polyetherpolyole D),
5 bis 30 Gew.-% Flammschutzmittel E),
1 bis 30 Gew.-% Treibmittel F),
0,5 bis 10 Gew.-% Katalysatoren G), und
0,5 bis 20 Gew.-% weitere Hilfs- und Zusatzstoffe H),
jeweils wie vorstehend definiert und jeweils bezogen auf das Gesamtgewicht der Komponenten B) bis H), wobei sich die Gew.-% zu 100 Gew.-% ergänzen, und wobei das Massenverhältnis der Summe der Komponenten B) und C) zu Komponente D) mindestens 7,5 beträgt.

Weiterhin ist das erfindungsgemäße Massenverhältnis der Summe der Komponenten B) und gegebenenfalls C) zu der Komponente D) in den erfindungsgemäßen Polyolkomponenten vorzugsweise kleiner als 80, bevorzugt kleiner als 40, besonders bevorzugt kleiner als 30, insbesondere bevorzugt kleiner als 20, speziell bevorzugt kleiner als 16 und im speziellen kleiner als 13.

Zur Herstellung der erfindungsgemäßen Polyurethan-Hartschaumstoffe werden die gegebenenfalls modifizierten organischen Polyisocyanate A), die speziellen erfindungsgemäßen Polyetheresterpolyole B), gegebenenfalls die weiteren Polyesterpolyole C), die Polyetherole D) und die weiteren Komponenten E) bis H) in solchen Mengen vermischt, dass das Äquivalenzverhältnis von NCO-Gruppen der Polyisocyanate A) zur Summe der reaktiven Wasserstoffatome der Komponenten B), gegebenenfalls C) sowie D) bis H), 1 bis 6:1, vorzugsweise 1,6 bis 5:1 und insbesondere 2,5 bis 3,5:1, beträgt.

Die Erfindung wird durch die nachstehenden Beispiele näher erläutert.

### Beispiele

Es wurden die nachstehenden Polyesterpolyole (Polyesterol 1) bzw. Polyetheresterpolyole (Polyesterol 2 und Polyesterol 3) eingesetzt, wobei der erfindungsgemäße Polyesterol 3 mit einem Polyetherol hergestellt wurde, welcher zwischen Alkoxylierung und Veresterung nicht aufgearbeitet werden musste, da die Alkoxylierung in Gegenwart eines aminischen Alkoxylierungskatalysators durchgeführt wurde.

Polyesterpolyol 1 (Vergleich): Veresterungsprodukt von Terephthalsäure (34 Mol-%), Ölsäure (9 Mol-%), Diethylenglykol (40 Mol-%) und Glyzerin (17 Mol-%) mit einer Hydroxylfunktionalität von 2,3, einer Hydroxylzahl von 244 mg KOH/g und einem Ölsäuregehalt im Polyesterol von 20 Gew.-%.

Polyesterpolyol 2 (Vergleich): Veresterungsprodukt von Terephthalsäure (31 Mol-%), Ölsäure (8 Mol-%), Diethylenglykol (43 Mol-%) und einem Polyether (18 Mol-%) auf Basis von Glyzerin und Ethylenoxid mit einer OH-Funktionalität von 3 und einer Hydroxylzahl von 535 mg KOH/g hergestellt in Gegenwart von KOH als Alkoxylierungskatalysator mit anschließender Neutralisation und Abtrennung des entstandenen Kaliumsalzes. Der Polyester weist eine Hydroxylfunktionalität von 2,3, eine Hydroxylzahl von 237 mg KOH/g und einen Ölsäuregehalt im Polyesterol von 15 Gew.-% auf.

Polyesterpolyol 3 (erfindungsgemäß): Veresterungsprodukt von Terephthalsäure (31 Mol-%), Ölsäure (8 Mol-%), Diethylenglykol (43 Mol-%) und einem Polyether (18 Mol-%) auf Basis von Glyzerin und Ethylenoxid mit einer OH-Funktionalität von 3 und einer Hydroxylzahl von 546 mg KOH/g, hergestellt in Gegenwart von Imidazol als Alkoxylierungskatalysator. Dieser Polyether wurde aufarbeitungsfrei in der nachfolgenden Veresterung eingesetzt. Der Polyester weist eine Hydroxylfunktionalität von 2,3, eine Hydroxylzahl von 239 mg KOH/g und einen Ölsäuregehalt im Polyesterpolyol von 15 Gew.-% auf.

### Bestimmung der Maßhaltigkeit

Zur Bestimmung der Maßhaltigkeit wird die Elementdicke nach der Verschäumung bestimmt. Hierfür wird ein Sandwichelement mit 0,05 mm dicker Aluminiumfolie als Deckschichtmaterial im Doppelbandverfahren hergestellt und 5 Minuten nach der Herstellung die Elementdicke in der Mitte des Elements bestimmt. Je näher die so bestimmte Elementdicke an der eingestellten Elementdicke (im vorliegenden Fall 170 mm) ist, desto besser ist die Maßhaltigkeit.

### Beispiele 1 sowie Vergleichsbeispiel 1 und 2

### Herstellung von Polyurethan-Hartschaumstoffen (Variante 1)

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyolkomponente zu Isocyanat von 100 : 160 verschäumt.

### Polyolkomponente:

| | |
|---|---|
| 65 Gewichtsteile | Polyesterol gemäß Beispielen bzw. Vergleichsbeispielen |
| 8 Gewichtsteile | Polyetherol aus ethoxyliertem Ethylenglykol mit einer Hydroxyfunktionalität von 2 und einer Hydroxyzahl von 190 mg KOH/g |
| 25 Gewichtsteile | Flammschutzmittel Trischlorisopropylphosphat (TCPP) |
| 2,0 Gewichtsteile | Stabilisator Tegostab B8443 (siliconhaltiger Stabilisator) |

### Zusatzstoffe:

| | |
|---|---|
| ca. 8 Gewichtsteile Iso-Pentan) | Pentan S 80:20 (bestehend aus 80 Gew.% n-Pentan und 20 Gew.-% |
| 1,6 Gewichtsteile | Ameisensäurelösung (85 Gew.-% in Wasser) |
| 1,6 Gewichtsteile | Kaliumformiat-Lösung (36 Gew.-% in Ethylenglykol) |
| weiterhin | Bis(2-dimethylaminoethyl)ether-Lösung (70 Gew.-% in Dipropylenglykol) zum Einstellen der Abbindezeiten |

### Isocyanatkomponente:

160 Gewichtsteile Lupranat® M50 (polymeres Methylendiphenyldiisocyanat (PMDI), mit einer Viskosität von ca. 500 mPa*s bei 25 °C von BASF SE)

Es wurden 170 mm dicke Sandwichelemente nach dem Doppelbandverfahren hergestellt. Die Rohdichte wurde dabei bei konstantem Gehalt der 85 %-igen wässrigen Ameisensäure-Lösung von 1,6 Teilen durch Variation des Pentangehalts auf 38 +/- 1 g/L eingestellt. Die Abbindezeit wurde ferner auf 39 +/- 1 s durch Variation des Anteils der 70 %-igen Bis(2-dimethylaminoethyl)ether-Lösung eingestellt.

Die Ergebnisse sind in Tabelle 1 zusammengefasst.

**Tabelle 1: Ergebnisse der Versuche zur Herstellung von 170 mm dicken Sandwichelementen nach dem Doppelbandverfahren**

| Polyesterpolyol: | Polyesterol 1 (Vergleich) | Polyesterol 2 (Vergleich) | Polyesterol 3 |
|---|---|---|---|
| Elementdicke nach Verschäumung | 186 mm | 177 mm | 177 mm |

Man erkennt dabei deutlich, dass die Polyetheresterpolyole (Polyesterol 2 und 3) die Maßhaltigkeit des Polyurethanhartschaumstoffs verbessern, wobei die Herstellung des erfindungsgemäßen Polyesterols 3 durch die Vermeidung des Aufarbeitungsschrittes (Neutralisation und Abtrennung des Kaliumsalzes) deutlich erleichtert ist. Diese Arbeitserleichterung macht sich im Endprodukt nicht negativ bemerkbar, wie Tabelle 1 zeigt.

## Patentansprüche

1. Verfahren zur Herstellung von Polyurethan-Hartschaumstoffen oder Polyisocyanurat-Hartschaumstoffen umfassend die Umsetzung von
A) mindestens einem Polyisocyanat,
B) mindestens einem Polyetheresterpolyol, erhältlich durch Veresterung von
b1) 10 bis 70 Mol-% einer Dicarbonsäurezusammensetzung, enthaltend
b11) 50 bis 100 Mol-%, bezogen auf die Dicarbonsäurezusammensetzung, einer oder mehrerer aromatischer Dicarbonsäuren oder Derivate derselben,
b12) 0 bis 50 Mol-%, bezogen auf die Dicarbonsäurezusammensetzung b1), einer oder mehrerer aliphatischer Dicarbonsäuren oder Derivate derselben,
b2) 2 bis 30 Mol-% einer oder mehrerer Fettsäuren und/oder Fettsäurederivate,
b3) 10 bis 70 Mol-% eines oder mehrerer aliphatischer oder cycloaliphatischer Diole mit 2 bis 18 C-Atomen oder Alkoxylate derselben,
b4) 2 bis 50 Mol-% eines Polyetherpolyols mit einer Funktionalität größer oder gleich 2, hergestellt durch Alkoxylierung eines Polyols mit einer Funktionalität größer oder gleich 2 in Gegenwart eines Amins als Katalysator, wobei der aminische Alkoxylierungskatalysator im Polyetherol b4) verbleibt,
jeweils bezogen auf die Gesamtmenge der Komponenten b1) bis b4), wobei sich die Komponenten b1) bis b4) zu 100 Mol-% addieren,
C) gegebenenfalls weiteren Polyesterpolyolen, die sich von denen der Komponente B) unterscheiden,
D) mindestens einem Polyetherpolyol, und
E) gegebenenfalls Flammschutzmitteln,
F) einem oder mehreren Treibmitteln,
G) Katalysatoren, und
H) gegebenenfalls weiteren Hilfsmitteln oder Zusatzstoffen,
wobei das Massenverhältnis der Summe der Komponenten B) und gegebenenfalls C) zu Komponente D) mindestens 7 beträgt.

2. Verfahren nach Anspruch 1, **dadurch gekennzeichnet, dass** das Massenverhältnis von Polyetheresterpolyolen B) zu den weiteren Polyesterpolyolen C) mindestens 0,1 beträgt.

3. Verfahren nach Anspruch 2, **dadurch gekennzeichnet, dass** keine weiteren Polyesterpolyole C) mit umgesetzt werden.

4. Verfahren nach einem oder mehreren der Ansprüche 1 bis 3, **dadurch gekennzeichnet, dass** das Massenverhältnis der Summe der Komponenten B) und C) zu der Komponente D) kleiner als 80, bevorzugt kleiner als 40, besonders bevorzugt kleiner als 30, insbesondere bevorzugt kleiner als 20, speziell bevorzugt kleiner als 16 und im speziellen kleiner als 13 ist.

5. Verfahren nach einem oder mehreren der Ansprüche 1 bis 4, **dadurch gekennzeichnet, dass** das Polyetherpolyol b4) eine Funktionalität von > 2 aufweist.

6. Verfahren nach einem oder mehreren der Ansprüche 1 bis 5, **dadurch gekennzeichnet, dass** das Polyetherpolyol b4) hergestellt ist durch Alkoxylierung eines Polyols, ausgewählt aus der Gruppe bestehend aus Sorbit, Pentaerythrit, Trimethylolpropan, Glycerin, Polyglycerin und deren Gemischen.

7. Verfahren nach einem oder mehreren der Ansprüche 1 bis 6, **dadurch gekennzeichnet, dass** das Polyetherpolyol b4) durch Alkoxylierung mit Ethylenoxid hergestellt ist.

8. Verfahren nach einem oder mehreren der Ansprüche 1 bis 7, **dadurch gekennzeichnet, dass** die Komponente b11) ein oder mehrere Verbindungen, ausgewählt aus der Gruppe bestehend aus Terephthalsäure, Dimethylterephthalat, Polyethylenterephthalat, Phthalsäure, Phthalsäureanhydrid und Isopththalsäure, enthält..

9. Verfahren nach einem oder mehreren der Ansprüche 1 bis 8, **dadurch gekennzeichnet, dass** die Dicarbonsäurezusammensetzung b1) keine aliphatischen Dicarbonsäuren b12) enthält.

10. Verfahren nach einem oder mehreren der Ansprüche 1 bis 9, **dadurch gekennzeichnet, dass** die Fettsäure oder das Fettsäurederivat b2) ausgewählt sind aus der Gruppe bestehend aus Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl sowie Fettsäuren, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

11. Verfahren nach Anspruch 10, **dadurch gekennzeichnet, dass** die Fettsäure oder das Fettsäurederivat b2) ausgewählt ist aus der Gruppe bestehend aus Ölsäure und Ölsäuremethylester.

12. Verfahren nach einem oder mehreren der Ansprüche 1 bis 11, **dadurch gekennzeichnet, dass** die aliphatischen oder cycloaliphatischen Diole b3) ausgewählt sind aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-Pentandiol und Alkoxylaten derselben.

13. Verfahren nach einem oder mehreren der Ansprüche 1 bis 12, **dadurch gekennzeichnet, dass** die Polyetherol-Komponente D) aus Polyoxypropylenpolyolen und / oder Polyoxyethylenpolyolen, vorzugsweise Polyoxyethylenpolyolen besteht.

14. Verfahren nach einem oder mehreren der Ansprüche 1 bis 13, **dadurch gekennzeichnet, dass** die Polyetherol-Komponente D) ausschließlich aus Polyethylenglykol besteht und keine weiteren Polyetherole beinhaltet.

15. Verfahren nach einem oder mehreren der Ansprüche 1 bis 14, **dadurch gekennzeichnet, dass** die Flammschutzmittel E) keine mit Isocyanatgruppen reaktive Gruppen aufweisen..

16. Verfahren nach einem oder mehreren der Ansprüche 1 bis 15, **dadurch gekennzeichnet, dass** die Treibmittel F) chemische und physikalische Treibmittel beinhalten, wobei das chemische Treibmittel ausgewählt ist aus der Gruppe Wasser, Ameisensäure-Wasser-Mischungen und Ameisensäure, bevorzugt Ameisensäure-Wasser-Mischungen und Ameisensäure und das physikalische Treibmittel aus einem oder mehreren Pentanisomeren besteht.

17. Polyurethan-Hartschaumstoff oder Polyisocyanurathartschaumstoff, erhältlich nach dem Verfahren gemäß einem oder mehreren der Ansprüche 1 bis 16.

18. Verwendung der Polyurethan-Hartschaumstoffe oder Polyisocyanurat-Hartschaumstoffe gemäß Anspruch 17 zur Herstellung von Sandwichelementen mit starren oder flexiblen Deckschichten.

19. Polyolkomponente zur Herstellung von Polyurethan-Hartschaumstoffen enthaltend 10 bis 90 Gew.-% der Polyetheresterpolyole B),
0 bis 60 Gew.-% der weiteren Polyesterpoylole C),
0,1 bis 11 Gew.-% der Polyetherpolyole D),
2 bis 50 Gew.-% Flammschutzmittel E),
1 bis 45 Gew.-% Treibmittel F),
0,5 bis 10 Gew.-% Katalysatoren G),
0,5 bis 20 Gew.-% weitere Hilfs- und Zusatzstoffe H),
die Komponenten B) bis H) wie in den Ansprüchen 1 bis 16 definiert und jeweils bezogen auf das Gesamtgewicht der Komponenten B) bis H), wobei sich die Gew.-% zu 100 Gew.-% ergänzen, und wobei das Massenverhältnis der Summe der Komponenten B) und gegebenenfalls C) zu Komponente D) mindestens 7 beträgt.

20. Polyolkomponente nach Anspruch 19, **dadurch gekennzeichnet, dass** das Massenverhältnis der Summe der Komponenten B) und C) zu der Komponente D) kleiner als 80, bevorzugt kleiner als 40, besonders bevorzugt kleiner als 30, insbesondere bevorzugt kleiner als 20, speziell bevorzugt kleiner als 16 und im speziellen kleiner als 13 ist.

## Claims

1. A process for producing rigid polyurethane foams or rigid polyisocyanurate foams comprising the reaction of
A) at least one polyisocyanate,
B) at least one polyetherester polyol obtainable by esterification of
b1) 10 to 70 mol% of a dicarboxylic acid composition comprising
b11) 50 to 100 mol%, based on the dicarboxylic acid composition, of one or more aromatic dicarboxylic acids or derivatives thereof,
b12) 0 to 50 mol%, based on said dicarboxylic acid composition b1), of one or more aliphatic dicarboxylic acids or derivatives thereof,
b2) 2 to 30 mol% of one or more fatty acids and/or fatty acid derivatives,
b3) 10 to 70 mol% of one or more aliphatic or cycloaliphatic diols having 2 to 18 carbon atoms or alkoxylates thereof,
b4) 2 to 50 mol% of a polyether polyol having a functionality of not less than 2, prepared by alkoxylating a polyol having a functionality of not less than 2 in the presence of an amine as catalyst, wherein the aminic alkoxylation catalyst remains in the polyetherol b4),
all based on the total amount of components b1) to b4), wherein said components b1) to b4) sum to 100 mol%,
C) optionally further polyester polyols other than those of component B),
D) at least one polyether polyol, and
E) optionally flame retardants,
F) one or more blowing agents,
G) catalysts, and
H) optionally further auxiliaries or admixture agents,
wherein the mass ratio of total components B) and optionally C) to component D) is at least 7.

2. The process according to claim 1 wherein the mass ratio of polyetherester polyols B) to the further polyester polyols C) is at least 0.1.

3. The process according to claim 2 wherein no further polyester polyols C) are utilized.

4. The process according to one or more of claims 1 to 3 wherein the mass ratio of total components B) and C) to component D) is less than 80, preferably less than 40, more preferably less than 30, even more preferably less than 20, yet even more preferably less than 16 and yet still even more preferably less than 13.

5. The process according to one or more of claims 1 to 4 wherein said polyether polyol b4) has a functionality of > 2.

6. The process according to one or more of claims 1 to 5 wherein said polyether polyol b4) is prepared by alkoxylating a polyol selected from the group consisting of sorbitol, pentaerythritol, trimethylolpropane, glycerol, polyglycerol and mixtures thereof.

7. The process according to one or more of claims 1 to 6 wherein said polyether polyol b4) is prepared by alkoxylation with ethylene oxide.

8. The process according to one or more of claims 1 to 7 wherein said component b11) comprises one or more compounds selected from the group consisting of terephthalic acid, dimethyl terephthalate, polyethylene terephthalate, phthalic acid, phthalic anhydride and isophthalic acid.

9. The process according to one or more of claims 1 to 8 wherein said dicarboxylic acid composition b1) comprises no aliphatic dicarboxylic acids b12).

10. The process according to one or more of claims 1 to 9 wherein said fatty acid or fatty acid derivative b2) is selected from the group consisting of castor oil, polyhydroxy fatty acids, ricinoleic acid, hydroxyl-modified oils, grapeseed oil, black cumin oil, pumpkin kernel oil, borage seed oil, soybean oil, wheat germ oil, rapeseed oil, sunflower seed oil, peanut oil, apricot kernel oil, pistachio oil, almond oil, olive oil, macadamia nut oil, avocado oil, sea buckthorn oil, sesame oil, hemp oil, hazelnut oil, primula oil, wild rose oil, safflower oil, walnut oil, and fatty acids, hydroxyl-modified fatty acids and fatty acid esters based on myristoleic acid, palmitoleic acid, oleic acid, vaccenic acid, petroselic acid, gadoleic acid, erucic acid, nervonic acid, linoleic acid, α- and γ-linolenic acid, stearidonic acid, arachidonic acid, timnodonic acid, clupanodonic acid and cervonic acid.

11. The process according to claim 10 wherein said fatty acid or fatty acid derivative b2) is selected from the group consisting of oleic acid and methyl oleate.

12. The process according to one or more of claims 1 to 11 wherein said aliphatic or cycloaliphatic diols b3) are selected from the group consisting of ethylene glycol, diethylene glycol, propylene glycol, 1,3-propanediol, 1,4-butanediol, 1,5-pentanediol, 1,6-hexanediol, 2-methyl-1,3-propanediol and 3-methyl-1,5-pentanediol and alkoxylates thereof.

13. The process according to one or more of claims 1 to 12 wherein said polyetherol component D) consists of polyoxypropylene polyols and/or polyoxyethylene polyols, preferably polyoxyethylene polyols.

14. The process according to one or more of claims 1 to 13 wherein said polyetherol component D) consists exclusively of polyethylene glycol and does not comprise any further polyetherols.

15. The process according to one or more of claims 1 to 14 wherein said flame retardants E) have no isocyanate-reactive groups.

16. The process according to one or more of claims 1 to 15 wherein said blowing agents F) comprise chemical and physical blowing agents, wherein the chemical blowing agent is selected from the group water, formic acid-water mixtures and formic acid, preferably formic acid-water mixtures and formic acid and the physical blowing agent consists of one or more pentane isomers.

17. A rigid polyurethane or polyisocyanurate foam obtainable from the process according to one or more of claims 1 to 16.

18. The use of the rigid polyurethane or polyisocyanurate foams according to claim 17 for producing sandwich elements having rigid or flexible outer layers.

19. A polyol component for producing rigid polyurethane foams comprising
10 to 90 wt% of polyetherester polyols B),
0 to 60 wt% of further polyester polyols C),
0.1 to 11 wt% of polyether polyols D),
2 to 50 wt% of flame retardants E),
1 to 45 wt% of blowing agents F),
0.5 to 10 wt% of catalysts G),
0.5 to 20 wt% of further auxiliary and admixture agents H),
said components B) to H) as defined in claims 1 to 16 and all based on the total weight of components B) to H), wherein the wt% add up to 100 wt%, and wherein the mass ratio of total components B) and optionally C) to component D) is at least 7.

20. The polyol component according to claim 19 wherein the mass ratio of total components B) and C) to component D) is less than 80, preferably less than 40, more preferably less than 30, even more preferably less than 20, yet even more preferably less than 16 and yet still even more preferably less than 13.

## Revendications

1. Procédé de fabrication de mousses dures de polyuréthane ou de mousses dures de polyisocyanurate, comprenant la mise en réaction de :
A) au moins un polyisocyanate,
B) au moins un polyéther-ester-polyol, pouvant être obtenu par estérification de
b1) 10 à 70 % en moles d'une composition d'acides dicarboxyliques, contenant
b11) 50 à 100 % en moles, par rapport à la composition d'acides dicarboxyliques, d'un ou de plusieurs acides dicarboxyliques aromatiques ou dérivés de ceux-ci,
b12) 0 à 50 % en moles, par rapport à la composition d'acides dicarboxyliques b1), d'un ou de plusieurs acides dicarboxyliques aliphatiques ou dérivés de ceux-ci,
b2) 2 à 30 % en moles d'un ou de plusieurs acides gras et/ou dérivés d'acides gras,
b3) 10 à 70 % en moles d'un ou de plusieurs diols aliphatiques ou cycloaliphatiques contenant 2 à 18 atomes C ou alcoxylates de ceux-ci,
b4) 2 à 50 % en moles d'un polyéther-polyol ayant une fonctionnalité supérieure ou égale à 2, fabriqué par alcoxylation d'un polyol ayant une fonctionnalité supérieure ou égale à 2 en présence d'une amine en tant que catalyseur, le catalyseur d'alcoxylation aminé restant dans le polyétherol b4),
à chaque fois par rapport à la quantité totale des composants b1) à b4), la somme des composants b1) à b4) étant de 100 % en moles,
C) éventuellement d'autres polyester-polyols, qui sont différents de ceux du composant B),
D) au moins un polyéther-polyol et
E) éventuellement des agents ignifuges,
F) un ou plusieurs agents gonflants,
G) des catalyseurs et
H) éventuellement d'autres adjuvants ou additifs,
le rapport en masse entre la somme des composants B) et éventuellement C) et le composant D) étant d'au moins 7.

2. Procédé selon la revendication 1, **caractérisé en ce que** le rapport en masse entre les polyéther-ester-polyols B) et les autres polyester-polyols C) est d'au moins 0,1.

3. Procédé selon la revendication 2, **caractérisé en ce qu'**aucun autre polyester-polyol C) n'est mis en réaction.

4. Procédé selon une ou plusieurs des revendications 1 à 3, **caractérisé en ce que** le rapport en masse entre la somme des composants B) et C) et le composant D) est inférieur à 80, de préférence inférieur à 40, de manière particulièrement préférée inférieur à 30, de manière notamment préférée inférieur à 20, de manière spécialement préférée inférieur à 16 et en particulier inférieur à 13.

5. Procédé selon une ou plusieurs des revendications 1 à 4, **caractérisé en ce que** le polyéther-polyol b4) présente une fonctionnalité > 2.

6. Procédé selon une ou plusieurs des revendications 1 à 5, **caractérisé en ce que** le polyéther-polyol b4) est fabriqué par alcoxylation d'un polyol choisi dans le groupe constitué par le sorbitol, la pentaérythrite, le triméthylolpropane, la glycérine, la polyglycérine et leurs mélanges.

7. Procédé selon une ou plusieurs des revendications 1 à 6, **caractérisé en ce que** le polyéther-polyol b4) est fabriqué par alcoxylation avec de l'oxyde d'éthylène.

8. Procédé selon une ou plusieurs des revendications 1 à 7, **caractérisé en ce que** le composant b11) contient un ou plusieurs composés, choisis dans le groupe constitué par l'acide téréphtalique, le téréphtalate de diméthyle, le polyéthylène téréphtalate, l'acide phtalique, l'anhydride de l'acide phtalique et l'acide isophtalique.

9. Procédé selon une ou plusieurs des revendications 1 à 8, **caractérisé en ce que** la composition d'acides dicarboxyliques b1) ne contient pas d'acides dicarboxyliques aliphatiques b12).

10. Procédé selon une ou plusieurs des revendications 1 à 9, **caractérisé en ce que** l'acide gras ou le dérivé d'acide gras b2) est choisi dans le groupe constitué par l'huile de ricin, les acides polyhydroxy-gras, l'acide ricinoléique, les huiles à modification hydroxyle, l'huile de pépins de raisin, l'huile de cumin noir, l'huile de graines de courge, l'huile de graines de bourrache, l'huile de soja, l'huile de blé, l'huile de colza, l'huile de tournesol, l'huile d'arachide, l'huile de noyaux d'abricot, l'huile de pistache, l'huile d'amande, l'huile d'olive, l'huile de noix de macadamia, l'huile d'avocat, l'huile d'argousier, l'huile de sésame, l'huile de chanvre, l'huile de noisette, l'huile de primevère, l'huile de rose sauvage, l'huile de carthame, l'huile de noix, ainsi que les acides gras, les acides gras à modification hydroxyle et les esters d'acides gras à base d'acide myristoléique, d'acide palmitoléique, d'acide oléique, d'acide vaccénique, d'acide pétrosélinique, d'acide gadoléique, d'acide érucique, d'acide nervonique, d'acide linoléique, d'acide α- et γ-linolénique, d'acide stéaridonique, d'acide arachidonique, d'acide timnodonique, d'acide clupanodonique et d'acide cervonique.

11. Procédé selon la revendication 10, **caractérisé en ce que** l'acide gras ou le dérivé d'acide gras b2) est choisi dans le groupe constitué par l'acide oléique et l'ester méthylique de l'acide oléique.

12. Procédé selon une ou plusieurs des revendications 1 à 11, **caractérisé en ce que** les diols aliphatiques ou cycloaliphatiques b3) sont choisis dans le groupe constitué par l'éthylène glycol, le diéthylène glycol, le propylène glycol, le 1,3-propanediol, le 1,4-butanediol, le 1,5-pentanediol, le 1,6-hexanediol, le 2-méthyl-1,3-propanediol et le 3-méthyl-1,5-pentanediol et leurs alcoxylates.

13. Procédé selon une ou plusieurs des revendications 1 à 12, **caractérisé en ce que** le composant polyétherol D) est constitué par des polyoxypropylène-polyols et/ou des polyoxyéthylène-polyols, de préférence des polyoxyéthylène-polyols.

14. Procédé selon une ou plusieurs des revendications 1 à 13, **caractérisé en ce que** le composant polyétherol D) est exclusivement constitué par du polyéthylène glycol et ne contient pas d'autres polyétherols.

15. Procédé selon une ou plusieurs des revendications 1 à 14, **caractérisé en ce que** les agents ignifuges E) ne comprennent pas de groupes réactifs avec les groupes isocyanate.

16. Procédé selon une ou plusieurs des revendications 1 à 15, **caractérisé en ce que** les agents gonflants F) contiennent des agents gonflants chimiques et physiques, l'agent gonflant chimique étant choisi dans le groupe constitué par l'eau, les mélanges acide formique-eau et l'acide formique, de préférence les mélanges acide formique-eau et l'acide formique, et l'agent gonflant physique étant constitué par un ou plusieurs isomères de pentane.

17. Mousse dure de polyuréthane ou mousse dure de polyisocyanurate, pouvant être obtenue par le procédé selon une ou plusieurs des revendications 1 à 16.

18. Utilisation des mousses dures de polyuréthane ou des mousses dures de polyisocyanurate selon la revendication 17 pour la fabrication d'éléments en sandwich comprenant des couches de recouvrement rigides ou flexibles.

19. Composant polyol pour la fabrication de mousses dures de polyuréthane contenant :
10 à 90 % en poids des polyéther-ester-polyols B),
0 à 60 % en poids des autres polyester-polyols C),
0,1 à 11 % en poids des polyéther-polyols D),
2 à 50 % en poids d'agents ignifuges E),
1 à 45 % en poids d'agents gonflants F),
0,5 à 10 % en poids de catalyseurs G),
0,5 à 20 % en poids d'autres adjuvants et additifs H),
les composants B) à H) étant tels que définis dans les revendications 1 à 16 et à chaque fois par rapport au poids total des composants B) à H), la somme des % en poids étant de 100 % en poids, et le rapport en masse entre la somme des composants B) et éventuellement C) et le composant D) étant d'au moins 7.

20. Composant polyol selon la revendication 19, **caractérisé en ce que** le rapport en masse entre la somme des composants B) et C) et le composant D) est inférieur à 80, de préférence inférieur à 40, de manière particulièrement préférée inférieur à 30, de manière notamment préférée inférieur à 20, de manière spécialement préférée inférieur à 16 et en particulier inférieur à 13.
